# EUROPEAN PATENT SPECIFICATION

(11) **EP 2 353 211 B1**
(45) Date of publication and mention of the grant of the patent: **20.04.2016**
(21) Application number: 09828650.3
(22) Date of filing: 02.11.2009
(51) Int. Cl.: H01R 13/62, H02G 3/08, F16L 19/065, H01R 13/59

(54) **CABLE JOINT PROTECTOR**
KABELVERBINDUNGSSCHUTZ
DISPOSITIF DE PROTECTION DE JONCTION DE CÂBLES

(30) Priority: 03.11.2008 DK 200801513
(43) Date of publication of application: 10.08.2011
(73) Proprietor: PN Development APS, 6670 Holsted (DK)
(72) Inventor: NEDERGAARD, Paw, DK-6670 Holsted (DK)
(74) Representative: Gregersen, Niels Henrik
(86) International application number: PCT/DK2009/050288
(87) International publication number: WO 2010/060431

(56) References cited:
- EP-A1- 1 780 854
- EP-A2- 1 017 137
- WO-A1-99/40651
- DE-A1- 4 215 635
- US-A- 3 624 591
- US-A1- 2006 172 578
- US-B1- 6 447 323

## Description

### Field of the Invention

The present invention concerns a cable joint protection unit, the cable joint including an electric socket connected to a power source during operation, and where the cable joint includes an electric plug connected to a power consumer during operation, wherein the socket and the plug are containable in the unit for protection, the protective unit consists of a housing which contains at least one first cavity for receiving the socket, the housing having at least one first aperture for cable lead-in, said protective unit being mechanically secured to both the socket and the plug for providing mechanical tension relief.

### Background of the Invention

US 6,447,323 discloses a joint for electric cables which are protected by three different layers of union nuts providing protection and mechanical relief. A first internal union nut is disposed in immediate physical contact with the cables. The first union nut is sealed against a surrounding cylinder by O-rings. The surrounding cylinder consists of a first and a second section which e.g. may be screwed together. Outside this screw joint there is further an external flange which provides for the actual tension relief. The external flange is fastened to the inner plastic sections by means of a projecting edge in the outer union nut fitting into a recess in the inner plastic component. US 2006/172578 discloses a cable joint protector according to the preamble of claim 1.

### Object of the Invention

It is an object of the invention to achieve a simple protection of a cable joint against separation by pull action on the cable. The object is also to establish mutual securing and tension relief of a cable joint. A third object is to obtain partial moisture or rain protection of an external cable joint.

### Description of the Invention

The object may be achieved by a unit for protecting cable joints as specified in the preamble of claim 1, where the housing of the protective unit contains at least one second aperture for completely or partially receiving the plug, where the housing includes a number of fingers that entirely or partially enclose the plug, and where the fingers interact with an outer union nut for providing locking means for the plug in the protective unit.

Hereby may be achieved an efficient coupling of cable joints consisting of a live first part in the shape of a socket and a power receiving second part in the shape of a plug. By providing both parts internally of a housing and fastening them thereto by a union nut with regard to the plug, an effective mechanical coupling is achieved. This will be very usable in connection with extension wires for garden use in connection with use of all kinds of electric garden tools. In connection with e.g. hedge cutting, it is often a recurring problem that the hedge cutting is interrupted because the extension wire is subjected to a tensile force, causing the plug and socket to be pulled away and separating from each other. In addition to garden applications, the invention will be applicable in connection with e.g. construction where the work is often performed with extension flex for electric tools. By obtaining a mechanical coupling of extension wires, a more stable working process is achieved for the workers operating the tools. The described coupling is effective in that it is easy to separate and assemble such that it will be obvious to any craftsman or other user to use the unit for cable jointing, as the locking together occurs by operating a union nut which locks the plug part relative to the socket part.

At least the fingers surrounding the plug may be externally provided with means for retaining the outer union nut. When the outer union nut is screwed into position after mounting the plug, the fingers will be pressed inwards, and locking of the plug is achieved. However, it is advantageous that there is a lock such that the union nut can be secured at the inner position so that the union nut can maintain a pressure on the fingers.

The fingers may externally be provided with a spring catch that interacts with the inner side of the union nut. In a possible embodiment of the invention, securing the union nut may be effected by means of a spring catch, possibly provided as a kind of bayonet assembly. The union nut is to be pressed in with sufficient force such that the lock is activated, after which the union nut remains in its position. If the union nut is to be released from the spring catch or from a bayonet socket, a modest rotation of the union nut and a pressure on the side of the union nut are required before it is released.

The fingers may externally be provided with a screw thread, the screw thread interacting with a corresponding screw thread provided inside the union nut. Also, it will be possible to design union nut and housing and the exterior of the fingers with a kind of screw thread such that the union nut can be screwed into position. Several kinds of screw thread will be applicable, but by a possible embodiment, a simple flat screw thread consisting of a single obliquely extending projection externally of the housing may be chosen which interacts with a corresponding recess provided inside the ring. Hereby may be achieved a screwing on by turning the ring which is to be turned from one quarter of a revolution up to 2 or 3 complete revolutions. In particular it will be possible by a screw mechanism to provide a variable squeezing of the fingers such that it would be possible to use the same housing for different socket types within certain socket variants.

The housing may be designed with longitudinal ribs. The longitudinal ribs have several purposes. The first purpose is to impart mechanical stability to the housing, and the second purpose is that the longitudinal ribs form a good gripping surface in connection with operation of the union nut. At the same time, the external ribs will imply protection of the housing 4 itself, e.g. if on a workshop floor it is subjected to rough treatment.

The housing may externally be designed as a screw that may retain the socket. The housing cavity for receiving the socket may be provided with means for securing the socket, and these means may advantageously be a screw which is screwed down on the socket when this is mounted such that an efficient fastening is achieved.

The cavity of the housing may be adapted to the external shape of the socket. By adapting the outer shape of the cavity to the socket to be used, a really effective securing of this socket may be achieved. By changing the internal shape of the cavity it will be possible to make different units for different applications. On the background that different national rules provide for a great variety of plugs and sockets globally, it will be appropriate to change the inner cavity such that optimal adaptation is effected for the various socket types.

The internal shape of the fingers of the housing may be adapted to the external shape of the plug. Also, the shape of the external fingers may be adapted to the plug used. Hereby, it also becomes possible for the opposite half part only to achieve efficient adaptation to the sockets/plugs. By changing the physical form of the fingers, it becomes possible to adapt to a great variety of plugs. Thus it becomes possible to make an adaptation to various national standards.

### Description of the Drawing

- Figure 1: shows a unit 2 for a cable joint.
- Figure 2: shows the housing with longitudinal ribs.
- Figure 3: shows the unit from the opposite side.
- Figure 4: shows the housing as seen from above.
- Figure 5: shows the unit as seen from the back side.
- Figure 6: shows a unit as seen from the side.
- Figure 7: shows the unit 2 as seen from the front.
- Fig. 8: shows a sectional view through Figure 7.
- Figure 9: shows a sectional view along another plane through Figure 7.
- Figure 10: shows an alternative embodiment of a unit for a cable joint.
- Figure 11: shows the housing shown on Fig. 10 with longitudinal ribs.
- Figure 12: shows the unit from the opposite side on Fig. 10.
- Figure 13: shows the housing of Fig. 12, as seen from above.
- Figure 14: shows the housing of Fig. 13 as seen from the back.
- Figure 15: shows a unit of Fig. 14, as seen from the side.
- Figure 16: shows the housing of Fig. 15, as seen from the front.
- Figure 17: shows a sectional view through Figure 16 along the axis A - A.
- Figure 18: shows a sectional view of Figure 16, but this time by B-B.

### Detailed Description of the Invention

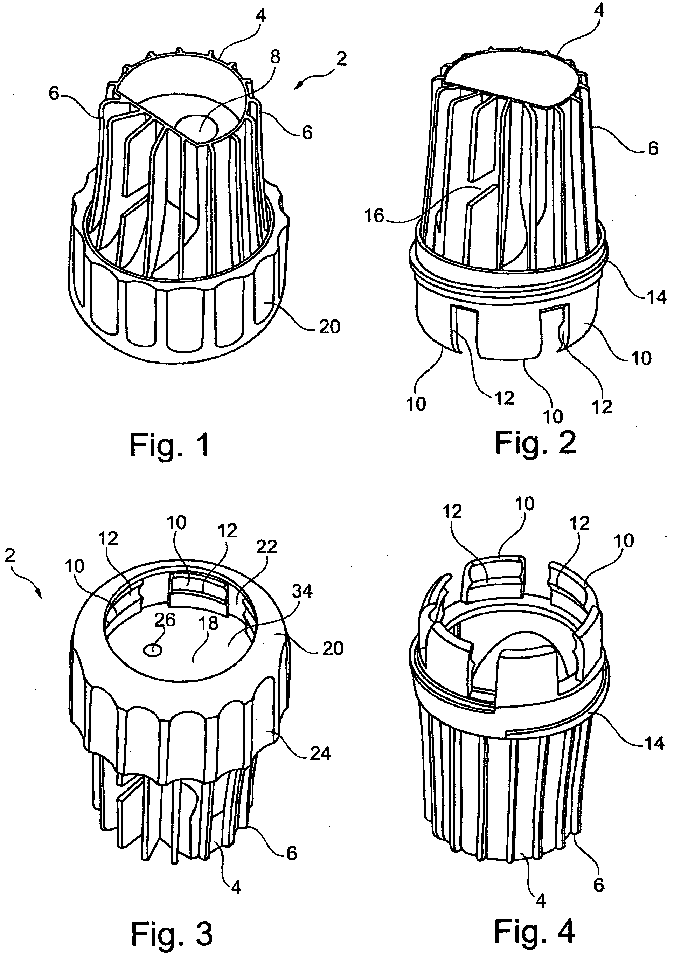

Figure 1 shows a unit 2 for a cable joint consisting of a housing 4, where the housing 4 is provided with longitudinal ribs 6, where a cable lead-in 8 is shown inside the housing 4. A union nut 20 is shown under the housing on Fig. 1.

Fig. 2 shows the housing 4 with longitudinal ribs 6, where the housing is provided with fingers 10 at the bottom of the Figure. These fingers are provided with projections 12. Also, an obliquely extending projection 14 is shown. And a screw hole 16 is shown.

Figure 3 shows the unit 2, but this time seen from the opposite side on Fig. 1. Furthermore, at the bottom on Figure 3 is indicated the housing 4 with longitudinal ribs 6. At the top on the Figure, the fingers 10 and the finger projections 12 are shown. Also, the union nut 20 is shown, and the union nut has an internal recess 22. Internally of the housing 4 is shown a surface 18 which delimits a cavity 34. In the surface 18 is shown a terminal hole 26.

Figure 4 shows the housing 4 as seen from the top, where the housing 4 is provided with longitudinal ribs 6. At the top of Fig. 4, the fingers 10 with the finger projections 12 are shown. Externally of the housing 4, the obliquely extending projection 14 is shown.

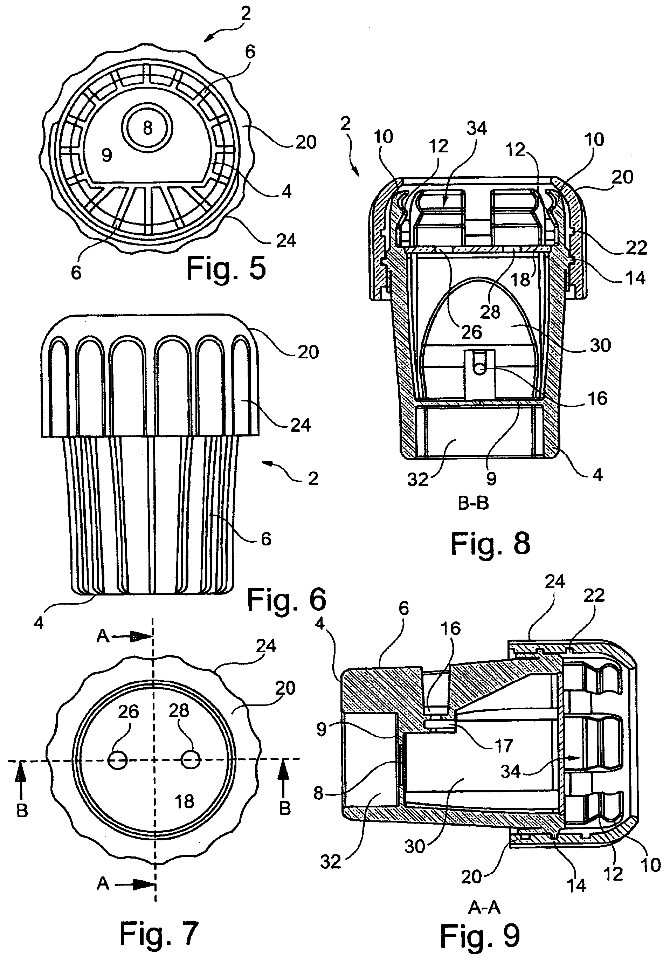

Fig. 5 shows the unit 2 as seen from the back side where an outline of the housing 4 is indicated, also indicating longitudinal ribs 6. Internally of the housing 4, the hole 8 for cable lead-in is shown, and the separation face 9 is shown. At the outer side of the housing 4, the union nut 20 and the gripping surfaces 24 of the union nut are shown.

Figure 6 shows a unit 2 as seen from the side. The unit 2 is made up of the housing 4 with longitudinal ribs 6 and the union nut 20 which is provided with gripping surfaces 24.

Figure 7 shows the unit 2 as seen from the front. The union nut 20 and the gripping surfaces 24 of the union nut are seen from the front side. Inside the union nut is indicated a surface 18 forming delimitation of the inner volume in the unit. The surface 18 has two holes 26 and 28 for terminal lead-in.

Figure 8 shows a sectional view through Fig. 7 along the axis B - B. There is thus indicated a housing 4. The housing 4 contains a separation face 9 forming the lower delimitation towards the inner volume 30. Also, the housing 4 consists of the fingers 10 and the finger projections 12. On the Figure is also shown the union nut 20, where the nut has a recess 22 whereas the housing 4 has a projection 14. A screw 16 is indicated inside the housing 4 for securing a socket in the volume 30. The volume 30 is divided by a face 18. In the surface 18 are shown terminal holes 26 and 28. Above the separation face 18 is shown a volume 34 for receiving the plug. At the bottom of Figure 4 is shown the volume 32 which is an opening for a cable lead-in which is not shown on this Figure.

Figure 9 shows a sectional view of Figure 7, however this time from A-A. The housing 4 is shown with longitudinal ribs 6 where the housing 4 is provided a cable lead-in 8 through a separation face 9. Also, the fingers 10 of the housing 4 and the finger projections 12 are shown. The housing is provided with a projection 14 formed by a screw thread. Also, there is shown a screw 16 which interacts with a screw hole in a metal insert 17. A union nut 20 is screwed on the housing 4, where the union nut has a recess 22 that interacts with the projection 14 of the housing. The union nut is externally provided with a gripping face 24. Inside the unit 2 is shown a first volume 30 for receiving a socket. Also, there is shown a second volume 32 in connection with cable lead-in, and further there is shown a third volume 34 for receiving the plug.

By this invention, it thus becomes possible to achieve an efficient tension relief of extension wires.

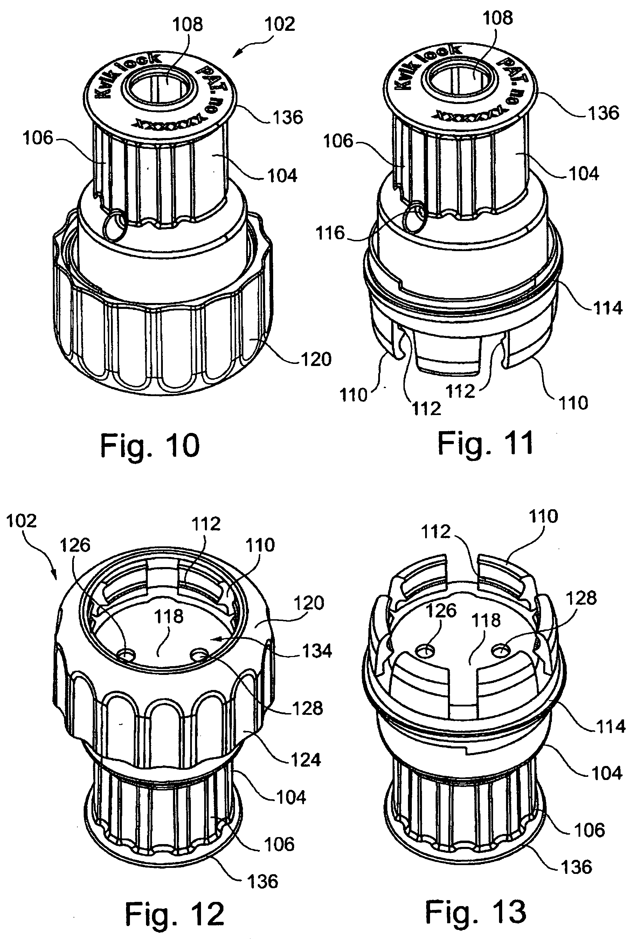

Figure 10 shows an alternative embodiment for a unit 102 for a cable joint consisting of a housing 104, where the housing 104 is provided with longitudinal ribs 106, where a cable lead-in 108 is shown inside the housing 104. A union nut 120 is shown under the housing 104 on Fig. 10. Around the cable lead-in 108, the housing 104 is provided with a collar 136. During use, the collar 136 forms an efficient protection if the unit 102 is dragged after an electric tool in a garden or on a construction site.

Fig. 11 shows the housing 104 with longitudinal ribs 106, where the housing is provided with fingers 110 at the bottom of the Figure. These fingers 110 are provided with projections 112. Also, an obliquely extending projection 114 is shown. And a screw hole 116 is shown. Also, the collar 136 is shown.

Figure 12 shows the unit 102, but this time seen from the opposite side on Fig. 10. Furthermore, at the bottom on Figure 12 is indicated the housing 104 with longitudinal ribs 106. At the top on the Figure, the fingers 110 and the finger projections 112 are shown. Also, the union nut 120 is shown, and the union nut has an internal recess 122. Internally of the housing 104 is shown a surface 118 which delimits a cavity 134. In the surface 118 are shown terminal holes 126 and 128. At the bottom, the collar 136 is shown.

Figure 13 shows the housing 104 as seen from the top, where the housing 104 is provided with longitudinal ribs 106. At the top of Fig. 13, the fingers 110 with the finger projections 112 are shown. Externally of the housing 104, the obliquely extending projection 114 is shown. At the bottom, the collar 136 is shown.

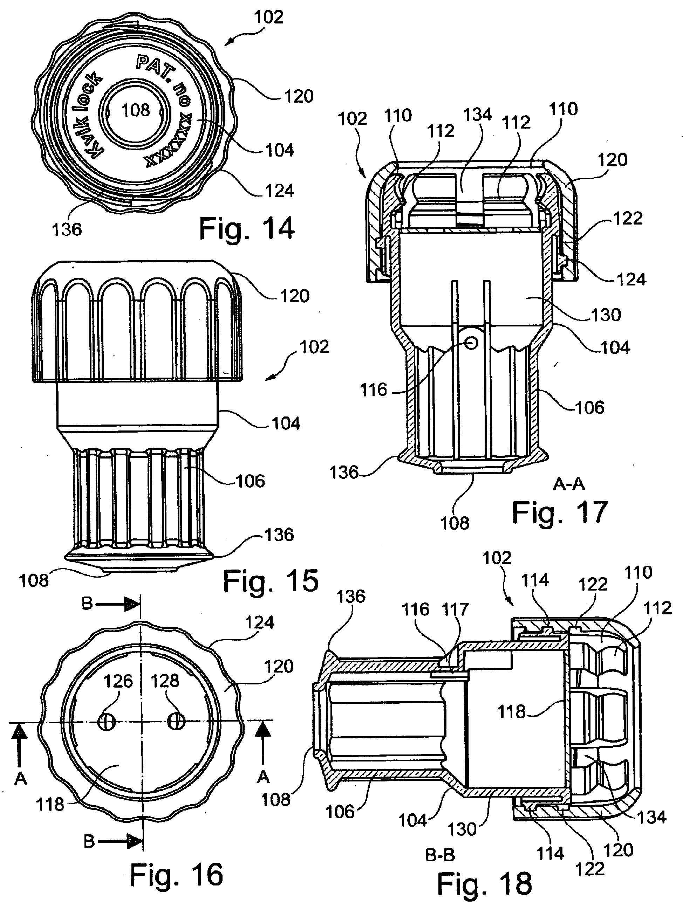

Fig. 14 shows the unit 102 as seen from the back side where an outline of the housing 104 and the collar 136 are indicated. The hole 108 for cable lead-in is shown inside the collar 136. At the outer side of the housing 104, the union nut 120 and the gripping surfaces 124 of the union nut are shown.

Figure 15 shows a unit 102 as seen from the side. The unit 102 is made up of the housing 104 with the collar 136 and with longitudinal ribs 106 and the union nut 120 which is provided with gripping surfaces 124.

Figure 16 shows the unit 102 as seen from the front. The union nut 120 and the gripping surfaces 124 of the union nut are seen from the front side. Inside the union nut 120 is indicated a surface 118 forming delimitation of the inner volume in the unit. The surface 118 has two holes 126 and 128 for terminal lead-in.

Figure 17 shows a sectional view through Fig. 16 along the axis A - A. There is thus indicated a housing 104. Also, the housing 104 consists of the fingers 110 and the finger projections 112. On the Figure is also shown the union nut 120, where the nut has a recess 122 whereas the housing 104 has a projection 114. A screw 116 is indicated inside the housing 104 for securing a socket in the volume 130. The volume 130 is divided by a face 118. In the surface 118 are shown terminal holes 126 and 128. Above the separation face 118 is shown a volume 134 for receiving the plug. At the bottom of Fig. 4 is shown the collar 136 which has an opening for a cable lead-in 108.

Figure 18 shows a sectional view of Figure 16, however this time from B-B. The housing 104 is shown with longitudinal ribs 106 where the housing 104 is provided a collar 136 with a cable lead-in 108. Also, the fingers 110 of the housing 104 and the finger projections 112 are shown. The housing is provided with a projection 114 forming a screw thread. Also, there is shown a screw 116 which interacts with a screw hole in a metal insert 117. A union nut 120 is screwed on the housing 104, where the union nut 120 has a recess 122 that interacts with the projection 114 of the housing.

The union nut 120 is externally provided with a gripping face 124. Inside the unit 102 is shown a first volume 130 for receiving a socket.

## Claims

1. A cable joint protector unit, in which the cable joint includes an electric socket connected to a power source during operation, and where the cable joint includes an electric plug connected to a power consumer during operation, wherein the socket and the plug are containable in the unit (2, 102) for protection, the protective unit (2, 102) consists of a housing (4, 104) which contains at least one first cavity (30, 130) for receiving the socket, the housing (4, 104) having at least one first aperture (8, 108) for cable lead-in, said protective unit (2, 102) being mechanically secured to both the socket and the plug and for providing mechanical tension relief, **characterised in that** the housing (4, 104) contains at least one second aperture (34, 134) for completely or partially receiving the plug, and that the housing (4, 104) includes a number of fingers (10, 110) that entirely or partially enclose the plug when it is inserted into the second aperture of the housing (4, 104), and that the fingers (10, 110) interact with an outer union nut (20, 120) for providing locking means for the plug in the protective unit (2, 102).

2. Cable joint protector unit according to claim 1, **characterised in that** at least the fingers (10, 110) surrounding the plug are externally provided with means for retaining the outer union nut (20, 120).

3. Cable joint protector unit according to claim 2, **characterised in that** the fingers (10, 110) are externally provided with a spring catch that interacts with the inner side of the union nut (20, 120).

4. Cable joint protector unit according to claim 2, **characterised in that** the fingers (10, 110) are externally provided with a screw thread (14, 114), the screw thread interacting with a corresponding screw thread (22, 122) provided internally in the union nut (20, 120).

5. Cable joint protector unit according to one of claims 1-4, **characterised in that** the housing (4, 104) is externally provided with longitudinal ribs (6, 106).

6. Cable joint protector unit according to one of claims 1-5, **characterised in that** the housing (4, 104) is externally provided with a screw (16, 116) retaining the socket.

7. Cable joint protector unit according to one of claims 1-6, **characterised in that** the cavity (30, 130) of the housing is adapted to the external shape of the socket.

8. Cable joint protector unit according to one of claims 1-7, **characterised in that** the internal shape of the fingers (10, 110) of the housing is adapted to the external shape of the plug.

## Patentansprüche

1. Kabelverbindungsschutz, bei dem die Kabelverbindung eine elektrische Buchse aufweist, die während des Betriebs mit einer Stromquelle verbunden ist, wobei die Kabelverbindung einen elektrischen Stecker aufweist, der mit einem Stromverbraucher während des Betriebs verbunden ist, wobei die Buchse und der Stecker in der Einheit (2, 102) zum Schutz enthalten sein können, wobei die Schutzeinheit (2, 102) aus einem Gehäuse (4, 104) besteht, das mindestens einen ersten Hohlraum (30, 130) zum Aufnehmen der Buchse enthält, wobei das Gehäuse (4, 104) mindestens eine erste Öffnung (8, 108) zur Kabeleinführung aufweist, wobei die Schutzeinheit (2, 102) mechanisch an der Buchse und dem Stecker gesichert ist und eine mechanische Spannungsentlastung bereitstellt, **dadurch gekennzeichnet, dass** das Gehäuse (4, 104) mindestens eine zweite Öffnung (34, 134) zum vollständigen oder teilweise Aufnehmen des Steckers enthält, und dadurch, dass das Gehäuse (4, 104) eine Anzahl von Fingern (10, 110) aufweist, die den Stecker ganz oder teilweise umgeben, wenn dieser in die zweite Öffnung des Gehäuses (4, 104) eingeführt ist, und dadurch, dass die Finger (10, 110) mit einer äußeren Überwurfmutter (20, 120) zum Bereitstellen von Verriegelungsmitteln für den Stecker in der Schutzeinheit (2, 102) zusammenwirken.

2. Kabelverbindungsschutz nach Anspruch 1, **dadurch gekennzeichnet, dass** mindestens die Finger (10, 110), die den Stecker umgeben, extern mit Mitteln zum Halten der äußeren Überwurfmutter (20, 120) bereitgestellt sind.

3. Kabelverbindungsschutz nach Anspruch 2, **dadurch gekennzeichnet, dass** die Finger (10, 110) extern mit einer Federklinke bereitgestellt sind, die mit der Innenseite der Überwurfmutter (20, 120) zusammenwirkt.

4. Kabelverbindungsschutz nach Anspruch 2, **dadurch gekennzeichnet, dass** die Finger (10, 110) extern mit einem Schraubgewinde (14, 114) bereitgestellt sind, wobei das Schraubgewinde mit einem zugehörigen Schraubgewinde (22, 122) zusammenwirkt, das auf der Innenseite der Überwurfmutter (20, 120) bereitgestellt ist.

5. Kabelverbindungsschutz nach einem der Ansprüche 1-4, **dadurch gekennzeichnet, dass** das Gehäuse (4, 104) außen mit Längsrippen (6, 106) bereitgestellt ist.

6. Kabelverbindungsschutz nach einem der Ansprüche 1-5, **dadurch gekennzeichnet, dass** das Gehäuse (4, 104) außen mit einer Schraube (16, 116) bereitgestellt ist, welche die Buchse hält.

7. Kabelverbindungsschutz nach einem der Ansprüche 1-6, **dadurch gekennzeichnet, dass** der Hohlraum (30, 130) des Gehäuses für die äußere Form der Buchse ausgelegt ist.

8. Kabelverbindungsschutz nach einem der Ansprüche 1-7, **dadurch gekennzeichnet, dass** die innere Form der Finger (10, 110) des Gehäuses für die äußere Form des Steckers ausgelegt ist.

## Revendications

1. Unité de protection de jonction de câbles, cette jonction de câbles comprenant une prise électrique connectée à une source d'alimentation pendant l'utilisation, et cette jonction de câbles comprenant une fiche électrique connectée à un consommateur d'énergie pendant l'utilisation, cette prise et cette fiche pouvant être contenues dans l'unité (2, 102) pour être protégées, l'unité de protection (2, 102) consistant en un boîtier (4, 104) qui contient au moins une première cavité (30, 130) pour recevoir la prise, le boîtier (4, 104) ayant au moins une première ouverture (8, 108) pour l'élément d'entrée du câble, ladite unité de protection (2, 102) étant fixée mécaniquement à la fois à la prise et à la fiche et pour fournir un soulagement mécanique de la tension, **caractérisée en ce que** le boîtier (4, 104) contient au moins une deuxième ouverture (34, 134) pour recevoir la fiche complètement ou partiellement et **en ce que** le boîtier (4, 104) comprend un certain nombre de doigts (10, 110) qui renferment la fiche entièrement ou partiellement lorsqu'elle est insérée dans la deuxième ouverture du boîtier (4, 104), et **en ce que** les doigts (10, 110) interagissent avec un écrou-raccord extérieur (20, 120) pour fournir un moyen de blocage pour la fiche dans l'unité de protection (2, 102).

2. Unité de protection de jonction de câbles selon la revendication 1, **caractérisée en ce qu'**au moins les doigts (10, 110) entourant la fiche sont pourvus extérieurement d'un moyen pour retenir l'écrou-raccord extérieur (20, 120).

3. Unité de protection de jonction de câbles selon la revendication 2, **caractérisée en ce que** les doigts (10, 110) sont pourvus extérieurement d'un verrou à ressort qui interagit avec le côté interne de l'écrou-raccord (20, 120).

4. Unité de protection de jonction de câbles selon la revendication 2, **caractérisée en ce que** les doigts (10, 110) sont pourvus extérieurement d'un filetage de vis (14, 114), ce filetage de vis interagissant avec un filetage de vis correspondant (22, 122) prévu intérieurement dans l'écrou-raccord (20, 120).

5. Unité de protection de jonction de câbles selon une des revendications 1 à 4, **caractérisée en ce que** le boîtier (4, 104) est pourvu extérieurement de nervures longitudinales (6, 106).

6. Unité de protection de jonction de câbles selon une des revendications 1 à 5, **caractérisée en ce que** le boîtier (4, 104) est pourvu extérieurement d'une vis (16, 116) retenant la prise.

7. Unité de protection de jonction de câbles selon une des revendications 1 à 6, **caractérisée en ce que** la cavité (30, 130) du boîtier est adaptée à la forme externe de la prise.

8. Unité de protection de jonction de câbles selon une des revendications 1 à 7, **caractérisée en ce que** la forme interne des doigts (10, 110) du boîtier est adaptée à la forme externe de la fiche.
